# EUROPEAN PATENT SPECIFICATION

(11) **EP 3 046 266 B1**
(45) Date of publication and mention of the grant of the patent: **10.10.2018**
(21) Application number: 13881018.9
(22) Date of filing: 18.11.2013
(51) Int. Cl.: H04B 5/00, H04L 29/08, H04W 4/08, H04L 29/06

(54) **DATA TRANSMISSION METHOD, DEVICE AND TERMINAL**
DATENÜBERTRAGUNGSVERFAHREN, -VORRICHTUNG UND ENDGERÄT
PROCÉDÉ, DISPOSITIF ET TERMINAL DE TRANSMISSION DE DONNÉES

(30) Priority: 12.09.2013 CN 201310416406
(43) Date of publication of application: 20.07.2016
(73) Proprietor: ZTE Corporation, Shenzhen, Guangdong 518057 (CN)
(72) Inventor: FAN, Xia, Shenzhen Guangdong 518057 (CN); GU, Jianqing, Shenzhen Guangdong 518057 (CN); LI, Wenjuan, Shenzhen Guangdong 518057 (CN)
(74) Representative: Brevalex
(86) International application number: PCT/CN2013/087353
(87) International publication number: WO 2014/161317

(56) References cited:
- EP-A1- 2 381 708
- CN-A- 101 155 214
- CN-A- 101 626 256
- CN-A- 101 729 100
- CN-A- 103 220 019
- US-B2- 8 090 767

## Description

### TECHNICAL FIELD

The disclosure relates to the field of communications, and more particularly, to a data transmission method and device, and a terminal.

### BACKGROUND

In the related art, during data transmission between close terminals, a Bluetooth and Wireless Fidelity Direct (WiFi Direct) method is commonly adopted. WiFi Direct transmission is taken as an example, and a transmission process generally has the steps as follows.
1. Both a sending party and a receiving party turn on WiFi Direct switches.
2. A searching function is started to search for an opposite party.
3. A device is selected to be paired, a password is input, the opposite party performs pairing confirmation, and therefore a pairing process is completed.
4. The sending party selects a file to be transmitted on a file selection
5. A certain target device is selected on a sharing interface, and the file to be transmitted is sent to the target device via WiFi Direct.
6. The receiving party clicks to receive the file so as to complete file transmission.
7. If it is expected that a file is continuously transmitted, it is necessary to return to step 4 to repeat the above-mentioned flow.

Thus, it can be seen that during close data transmission in the related art, a user needs to manually open WiFi, a data transmission process is complicated and needs to be intervened by the user, and therefore the user needs to operate too many steps; and moreover, when a plurality of files are transmitted, step 4 to step 6 need to be repeated. In addition, in the related art, only a mode of transmitting data from a source-end device to a target-end device is provided, and when one source-end device transmits data to a plurality of target-end devices, step 1 to step 6 need to be repeated. The repetition operation is relatively complicated, the operation complexity of the user is improved, and the time overhead is increased.

According to EP2381708, method and apparatus for transferring a file from a sending wireless device to a receiving wireless device in a short-range wireless system. A file to be sent to the receiving wireless device is selected on the sending wireless device. The sending wireless device has a device list of receiving wireless devices. If the receiving wireless device is absent on the device list, the sending wireless device searches and identifies new devices. A device among the identified new devices is selected as the receiving wireless device. A connection is established between the sending wireless device and the receiving wireless device; and the file is sent to the receiving wireless device.

### SUMMARY

In view of this, embodiments of the disclosure provide a data transmission method and device and a terminal, which at least solve the problems in the related art that a data transmission process is complicated and needs to be intervened by a user and the user needs to operate too many steps during data transmission.

The features of the method and device according to the present disclosure are defined in the independent claims, and the preferable features according to the present invention are defined in the dependent claims.

In the technical solutions in the embodiments of the disclosure, a transmission process is mainly performed by devices in an automatic manner, the user does not need to perform too much intervention, and the operation steps of the user are simplified; when being transmitted, a plurality of files can be retained in the file queue, thereby avoiding repeated operation after the transmission of a file is completed each time; and when files are transmitted to a plurality of target devices, the target devices can be stored in the device queue, thereby avoiding re-searching of a corresponding target device when a file is sent to each target device, greatly simplifying the flow, and improving the transmission efficiency.

### BRIEF DESCRIPTION OF THE DRAWINGS

Fig. 1 is a flowchart of a data transmission method according to embodiment 1 of the disclosure;
Fig. 2 is a flowchart of a data transmission method according to embodiment 2 of the disclosure;
Fig. 3 is a structure diagram of a data transmission device according to embodiment 1 of the disclosure;
Fig. 4 is a structure diagram of a data transmission device according to embodiment 2 of the disclosure;
Fig. 5 is a structural diagram of a data transmission system according to an embodiment of the disclosure;
Fig. 6 is a structure diagram of a queue according to embodiment 3 of the disclosure;
Fig. 7 is a flowchart of user operation according to embodiment 3 of the disclosure;
Fig. 8 is a flowchart of a file transmission process according to embodiment 3 of the disclosure;
Fig. 9 is an operation flowchart of a source-end device according to embodiment 3 of the disclosure; and
Fig. 10 is an operation flowchart of a target-end device according to embodiment 3 of the disclosure.

### DETAILED DESCRIPTION

In order to make the technical problems to be solved, technical solutions and advantages of the disclosure clearer, the disclosure is described below with reference to the drawings and specific embodiments in detail.

The embodiments of the disclosure provide a data transmission method and device, and a terminal, which solve the problems in the related art that a data transmission process is complicated, the operation flow of a user is complicated and the operation efficiency of the transmission flow is low during data transmission. The operation flow of the user can be simplified, and the transmission efficiency of a file can be improved.

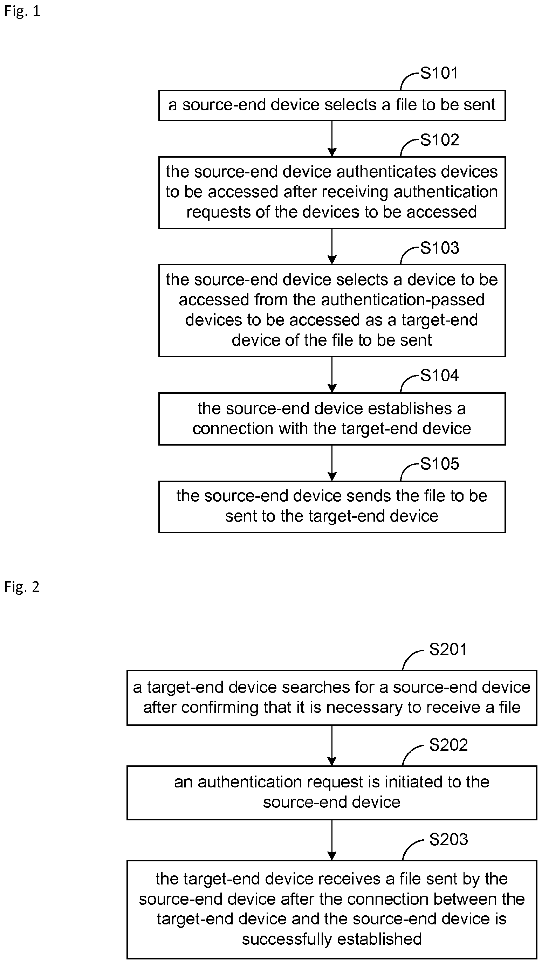

In order to solve the problems, an embodiment of the disclosure provides a data transmission method for sending data to a target-end device. As shown in Fig. 1, the method includes the steps as follows.
Step S101: a source-end device selects a file to be sent.
Step S102: the source-end device authenticates devices to be accessed after receiving authentication requests of the devices to be accessed.
Step S103: the source-end device selects a device to be accessed from the authentication-passed devices to be accessed as a target-end device of the file to be sent.
Step S104: the source-end device establishes a connection with the target-end device.
Step S105: the source-end device sends the file to be sent to the target-end device after the connection between the source-end device and the target-end device is successfully established.

In the technical solution, the file may include various data such as a picture, a text, an audio and a video and the like, the connection establishment and the file transmission are automatically completed by the devices, and the user does not need to perform intervention, thereby simplifying the operation flow of the user and improving the transmission efficiency of the file.

In the data transmission method in the related art, when a plurality of files are transmitted, due to the fact that only one file may be selected to be transmitted each time, files need to be repeatedly selected, target-end devices need to be repeatedly selected, and a connection is established for transmission, so that the operation steps are complicated, and the transmission efficiency is low.

In order to solve the problems, in the data transmission method provided by the embodiment of the disclosure,
the step that the source-end device selects the file to be sent may include that: the source-end device adds one or more files selected by a user as the file to be sent into a file queue; and
the step that the source-end device sends the file to be sent to the target-end device may include that: the source-end device sends the file to be sent in the file queue to the target-end device.

In the technical solution, due to the creation of the file queue, the user may select a plurality of files once, store the files in the file queue, and obtain the file to be sent from the file queue in sequence to be transmitted. It is unnecessary to repeatedly select the files to be transmitted, thereby simplifying the operation flow and improving the transmission efficiency. Certainly, the plurality of files may be stored in other manners. For example, the plurality of files may be packaged and compressed into a file to be transmitted, and the packaged compressed file is directly transmitted to the target-end device in transmission.

In the data transmission method in the related art, when data are transmitted to a plurality of target-end devices, the transmission steps of repeated connection establishment, file selection and the like are performed on each target device.

In order to solve the problems, in the data transmission method provided by the embodiment of the disclosure,
the step that the source-end device selects the device to be accessed from the authentication-passed devices to be accessed as the target-end device of the file to be sent includes that:
the source-end device adds the authentication-passed devices to be accessed into a device queue; and
the source-end device selects the device to be accessed from the device queue as the target-end device of the file to be sent.

In the technical solution, due to the creation of the device queue, when the data are transmitted to the plurality of target-end devices, the user may store a plurality of authentication-passed devices to be accessed in the device queue, and obtain the device to be accessed from the device queue as the target-end device for transmission during file transmission. The operation flow is simplified, and the transmission efficiency is improved. Certainly, the plurality of devices to be accessed may be stored in other manners.

Preferably, after the source-end device sends the file to be sent to the target-end device, the method may further include that: the source-end device receives and displays file receiving success information sent by the target-end device.

In the technical solution, the source-end device may display the file receiving success information, such that a source-end user knows a file transmission situation.

Preferably, after the source-end device receives and displays the file receiving success information sent by the target-end device, the method may further include that: the source-end device deletes the target-end device from the device queue; and the source-end device releases the established connection with the target-end device.

In the technical solution, after the source-end device completely transmits the file to the target-end device, the connection between the source-end device and the target-end device may be automatically released without manual operation, thereby simplifying the operation flow of the user.

An embodiment of the disclosure also provides a data transmission method for receiving data sent by a source-end device. As shown in Fig. 2, the method includes the steps as follows.
Step S201: a target-end device searches for a source-end device after confirming that it is necessary to receive a file.
Step S202: when the source-end device is found, the target-end device initiates an authentication request to the source-end device, such that the source-end device may authenticate the target-end device according to the authentication request, and may establish a connection with the target-end device after the authentication of the target-end device is passed.
Step S203: the target-end device receives a file sent by the source-end device after the connection between the target-end device and the source-end device is successfully established.

In the technical solution, the target-end device automatically searches for the source-end device and initiates the authentication request, and automatically receives the file sent by the source-end device after the connection is successfully established, a transmission process does not need to be intervened by a user, the operation flow of the user is simplified, and the transmission efficiency of the file is improved.

Preferably, after successfully receiving the file, the target-end device may send file receiving success information to the source-end device.

In the technical solution, after completely receiving the file, the target-end device sends a message to the source-end device to inform the source-end device of a file transmission situation.

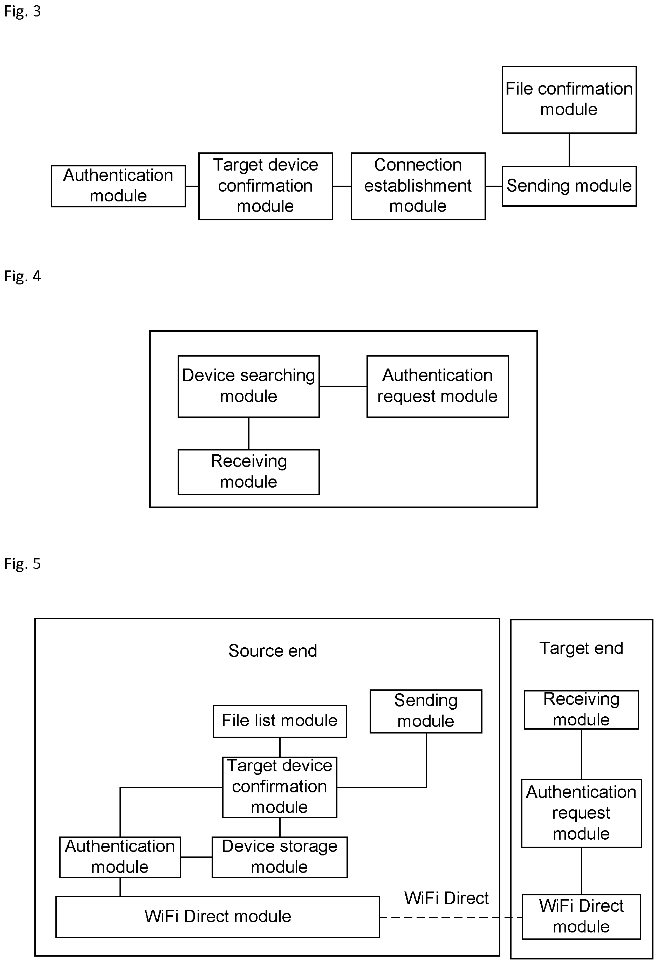

An embodiment of the disclosure provides a data transmission device configured to send data to a target-end device. As shown in Fig. 3, the device includes:
a file selection module, configured to select a file to be sent;
an authentication module, configured to authenticate devices to be accessed after receiving authentication requests of the devices to be accessed;
a target device confirmation module, configured to select a device to be accessed from the authentication-passed devices to be accessed as a target-end device of the file to be sent;
a connection establishment module, configured to establish a connection with the target-end device; and
a sending module, configured to send the file to be sent to the target-end device after the connection between the connection establishment module and the target-end device is successfully established.

In the technical solution, a source-end device confirms the file to be sent, receives the authentication requests of the devices to be accessed, then performs authentication, selects the target-end device from the authentication-passed devices to be accessed, establishes the connection, and sends the file to the target-end device via the established connection, wherein an authentication process, a connection establishment process and a file transmission process do not need to be intervened by a user and can be automatically completed by the devices, thereby simplifying the operation flow of the user and improving the transmission efficiency of the file.

Preferably, the device may further include: a file storage module, configured to store a file queue; the file selection module, further configured to add one or more files selected by a user as the file to be sent into the file queue; and the sending module, further configured to send the file to be sent in the file queue to the target-end device.

Preferably, the device may further include: a device storage module, configured to store a device queue; the authentication module, further configured to add the authentication-passed devices to be accessed into the device queue; and the target device confirmation module, further configured to select the device to be accessed from the device queue as the target-end device of the file to be sent.

Preferably, the device may further include: an information display module, configured to receive and display file receiving success information sent by the target-end device.

Preferably, the device may further include: a target device deletion module, configured to delete the target-end device from the device queue; and a connection release module, configured to release the connection established between the connection establishment module and the target-end device.

An embodiment of the disclosure also provides a terminal, which is configured to send data to a target-end device and includes the above-mentioned data transmission device.

An embodiment of the disclosure also provides a data transmission device configured to receive data sent by a source-end device. As shown in Fig. 4, the device includes:
a device searching module, configured to search for a source-end device after confirming that it is necessary to receive a file;
an authentication request module, configured to initiate an authentication request to the source-end device when the source-end device is found, such that the source-end device may authenticate a target-end device according to the authentication request, and may establish a connection with the device searching module after the authentication of the target-end device is passed; and
a receiving module, configured to receive a file sent by the source-end device after a connection between the device searching module and the source-end device is successfully established.

In the technical solution, the target-end device automatically searches for the source-end device, sends the authentication request to the source-end device, and receives the file sent by the source-end device after the connection is established, wherein a device searching process, an authentication request process and a file receiving process do not need to be intervened by a user and can be automatically completed by the devices, thereby simplifying the operation flow of the user and improving the transmission efficiency of the file.

Preferably, the device may further include: an information confirmation module, configured to send file receiving success information to the source-end device after the file is successfully received.

An embodiment of the disclosure also provides a terminal, which is configured to receive data sent by a source-end device and includes the above-mentioned data transmission device.

Fig. 5 is a structural diagram of a data transmission system according to an embodiment of the disclosure. As shown in Fig. 5, the data transmission system includes a source-end terminal and a target-end terminal,
wherein the source-end terminal includes:
a WiFi Direct module, configured to realize a function of a connection establishment module according to embodiment 1 of the disclosure, and establish a connection with the target-end device;
an authentication module, configured to authenticate devices to be accessed after receiving authentication requests of the devices to be accessed;
a file list module, configured to realize functions of a file selection module and a file storage module according to embodiment 1 of the disclosure, store a file queue, and add one or more files selected by a user as a file(s) to be sent into the file queue;
a device storage module, configured to store a device queue;
a target device confirmation module, configured to select a device to be accessed from the authentication-passed devices to be accessed as the target-end device of the file to be sent, namely select the file to be sent from the file list module, and select the corresponding device to be accessed from the device storage module as the target-end device; and
a sending module, configured to send the file to be sent to the target-end device after a connection between the WiFi Direct module and the target-end device is successfully established.

The target-end terminal includes:
a WiFi Direct module, configured to realize a function of a device searching module according to embodiment 2 of the disclosure, and search for a source-end device after confirming that it is necessary to receive a file;
an authentication request module, configured to initiate an authentication request to the source-end device after the source-end device is found, such that the source-end device may authenticate a target-end device according to the authentication request, and may establish a connection with the WiFi Direct module after the authentication of the target-end device is passed; and
a receiving module, configured to receive a file sent by the source-end device after a connection between the WiFi Direct module and the source-end device is successfully established.

In the technical solution, the data transmission method establishes the connection for data transmission by using a WiFi Direct method. The method may also establish the connection by using other manners such as a Bluetooth method.

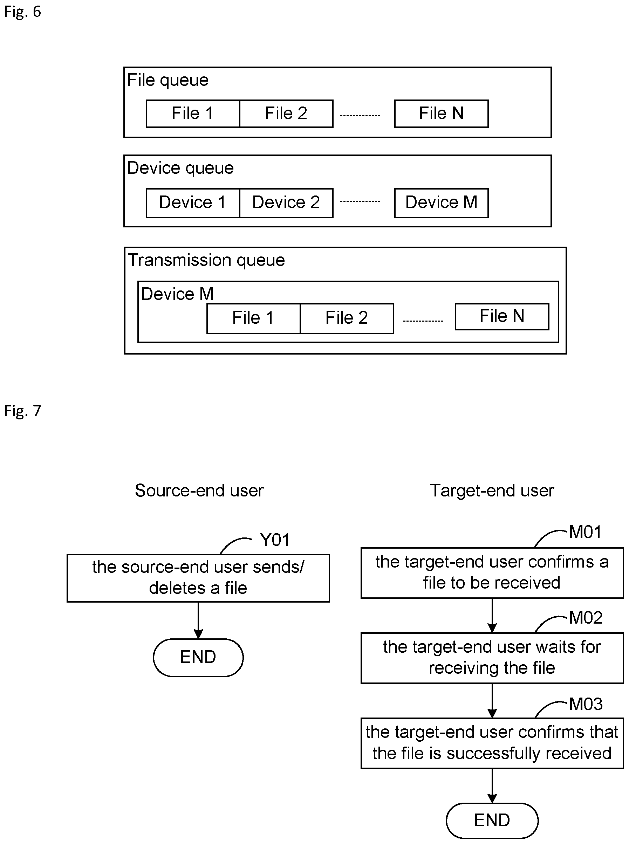

Fig. 6 is a structure diagram of a queue according to embodiment 3 of the disclosure. The queue includes a file queue, a device queue and a transmission queue, wherein the file queue is a queue for storing files to be sent. As shown in Fig. 6, the file queue includes file 1, file 2, ..., and file N.

The device queue is a queue for storing devices to be accessed. As shown in Fig. 6, the devices to be accessed include device 1, device 2, ..., and device M.

The transmission queue is a queue for transmitting a file to a target-end device. As shown in Fig. 6, the device M is determined as the target-end device, namely the queue for transmitting the file to the target-end device M includes file 1, file 2, ..., and file N.

In the technical solution, the source-end device constitutes the transmission queue with the target-end device and the file sent to the target-end device, the source-end device may not be used for constituting the transmission queue, after the target-end device is directly determined, the file queue is traversed, and a file corresponding to the target-end device is sent to the target-end device.

Fig. 7 is a flowchart of user operation according to embodiment 3 of the disclosure.

In the embodiment, a source-end user sets a file to be sent to a target user, and after the target user approaches the source-end user, a client is opened to receive the file. The method includes the user operation steps as shown in Fig.7.
Y01: the source-end user sends/deletes a file. In this step, the source-end user selects or deletes the sent file.
M01: the target-end user confirms a file to be sent. In this step, the target-end user confirms the file to be sent.
M02: the target-end user waits for receiving the file. In this process, the target-end user does not need to perform intervention.
M03: the target-end user performs file receiving success confirmation. In this step, after the file is successfully received, the target-end user performs confirmation.

In a process of transmitting the file from the source-end device to the target-end device, the source-end user only needs to select or delete the file to be sent; the target-end user only needs to confirm a file to be received, and performs confirmation after the file is successfully received; and other operations are automatically completed by the devices, and a user does not need to perform intervention.

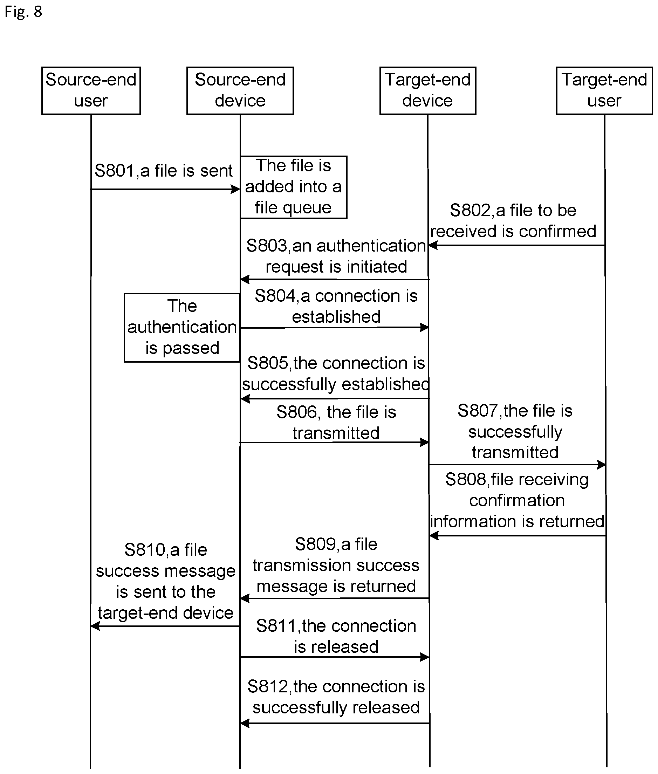

Fig. 8 is a flowchart of a file transmission process according to embodiment 3 of the disclosure. As shown in Fig. 8, the flow includes the steps as follows.
Step S801: a source-end user sends a file. In this step, the source-end user sends the file, and after receiving a request that the source-end user sends the file, a source-end device adds a file to be sent into a file queue, sets time and then waits for the access of a target-end device.
Step S802: a target-end user confirms a file to be received. In this step, after receiving a request that the target-end user confirms the file to be received, the target-end device searches for the source-end device.
Step S803: an authentication request is initiated. In this step, after finding the source-end device, the target-end device initiates the authentication request to the source-end device.
Step S804: a connection is established. In this step, after receiving an authentication request sent by the target-end device, the source-end device authenticates the received authentication request, and after the authentication is passed, a connection establishment request is sent to the target-end device.
Step S805: the connection is successfully established. In this step, after receiving the connection establishment request sent by the source-end device, the target-end device establishes the connection.
Step S806: the file is transmitted. In this step, the source-end device transmits the file to be sent to the target-end device.
Step S807: the file is successfully received. In this step, the target-end device receives the file and displays file receiving success information to the target-end user after the file is completely received.
Step S808: file receiving is confirmed. The target-end user confirms that the file is successfully received.
Step S809: a file transmission success message is returned. In this step, after receiving file receiving confirmation information from the target-end user, the target-end device feeds back the file transmission success message to the source-end device.
Step S810: a file success message is sent to the target-end device. The source-end device displays the file success message, sent to the target-end device, to the source-end user, such that the source-end user knows the target-end device to which the file has been successfully sent.
Step S811: the connection is released. In this step, the source-end device sends a connection release request to the target-end device.
Step S812: the connection is successfully released. In this step, the target-end device releases the connection after receiving the connection release request.

In the embodiment, the establishment and release of the connection pass through request and answer processes of the source-end device and the target-end device, and certainly, the connection may be directly established or released without a request.

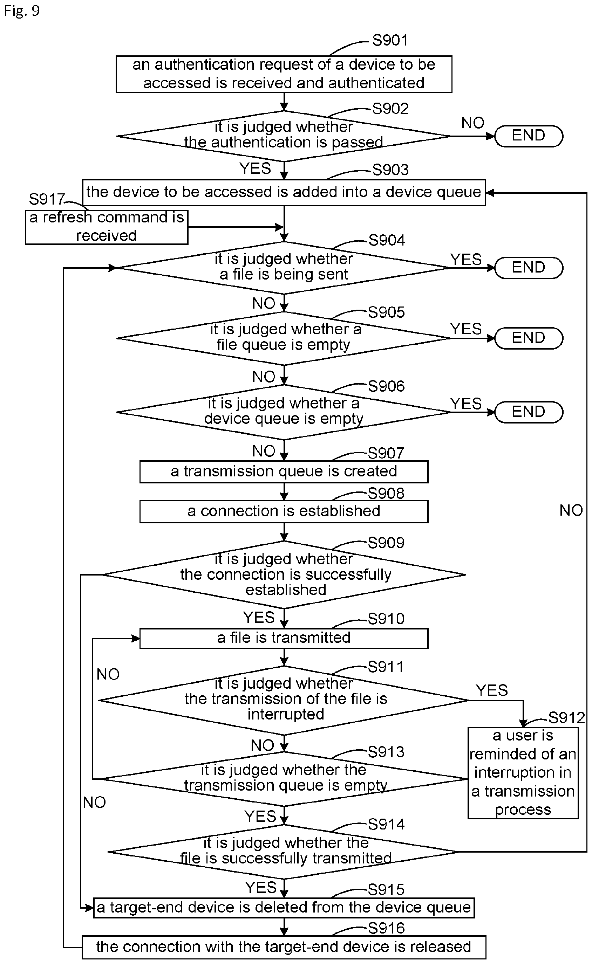

Fig. 9 is an operation flowchart of a source-end device according to embodiment 3 of the disclosure. As shown in Fig. 9, the flow includes the steps as follows.
Step S901: an authentication request of a device to be accessed is received and authenticated. In this step, when there is an access of a certain device to be accessed, the device to be accessed will initiate authentication, and a source-end device receives the authentication request sent by the device to be accessed and authenticates the authentication request
Step S902: it is judged whether authentication is passed, if YES, step S903 is executed, otherwise, the transmission process is ended.
Step S903: the device to be accessed is added into a device queue. In this step, the source-end device adds the authentication-passed device to be accessed into the device queue.
Step S904: it is judged whether a file is being sent, if YES, the transmission process is ended, otherwise, step S905 is executed. In this step, the source-end device judges whether a file is being sent currently, and if the file is being sent currently, the transmission process is ended.
Step S905: it is judged whether a file queue is empty, if YES, the transmission process is ended, otherwise, step S906 is executed. In this step, if the file queue is empty, it is shown that there is no file to be transmitted currently, so that the transmission process is ended.
Step S906: it is judged whether a device queue is empty, if YES, the transmission process is ended, otherwise, step S907 is executed. In this step, if the device queue is empty, it is shown that there is no device to be accessed to receive a file to be sent currently, so that the transmission process is ended.
Step S907: a transmission queue is created. In this step, the source-end device selects one of the devices to be accessed from the device queue as a target-end device, and a file, to be sent to the target-end device, in the file queue and the target-end device constitute the transmission queue.
Step S908: a connection is established. In this step, after the transmission queue is established, the source-end device sends a connection establishment request to the target-end device to establish the connection.
Step S909: it is judged whether the connection is successfully established. If YES, step S910 is executed, otherwise, step S913 is executed. In this step, the source-end device judges whether the connection between the source-end device and the target-end device is successfully established. If the connection establishment is not successful, the target-end device is deleted from the device queue.
Step S910: a file is transmitted. In this step, the source-end device transmits the file to the target-end device via the established connection.
Step S911: it is judged whether the transmission of the file is interrupted. If YES, step S912 is executed, otherwise, step S913 is executed. In this step, the source-end device judges whether a file transmission process is interrupted.
Step S912: a user is reminded of an interruption of the transmission process. In this step, after receiving a message representative of the interruption of the transmission process, the user may send a refresh instruction, step S917 is executed, the transmission process is re-executed, any operation may not be executed, and the transmission process is ended.
Step S913: it is judged whether the transmission queue is empty. If YES, step S914 is executed, otherwise, step S910 is re-executed. In this step, the source-end device judges whether the transmission queue is empty. If NO, it is shown that a file still needs to be transmitted to the target-end device, so that the file is continuously transmitted. If YES, it is shown that the file is completely transmitted to the target-end device.
Step S914: it is judged whether the file is successfully transmitted. If YES, step S915 is executed, otherwise, step S903 is re-executed. In this step, the source-end device judges whether the file is successfully sent to the target-end device, namely whether a file transmission success message returned by the target-end device is received. If YES, it is shown that the file is successfully sent to the target-end device. Otherwise, it is shown that the file is unsuccessfully sent to the target-end device, and the target-end device is re-added into the device queue so as to re-perform the transmission process.
Step S915: the target-end device is deleted from the device queue.
Step S916: the connection with the target-end device is released, and step S904 is re-executed. In this step, the process of transmission to the target-end device is completed, and the source-end device goes into a new transmission process.
Step S917: a refresh command is received, and step S904 is re-executed. In this step, the source-end device may receive the refresh command to go into a transmission process, and the refresh command may be sent by the user or may be a periodic command set by the device.

In the embodiment, one source-end device may send files to a plurality of target-end devices. Sending of files to two target-end devices is taken as an example.

A source-end user sets a file to be sent to target-end users. After two target users A and B approach the source-end user, clients are opened to receive the files; and
when the source-end device receives authentication requests of two target-end devices, the two devices may be accessed in sequence by using a relevant technology, and the source-end device transmits data to a firstly-accessed target-end device A by using a method according to embodiment 1; in a process of transmitting the data to the target-end device A from the source-end device, the source-end device authenticates a target-end device B and adds the target-end device B into a device list of the source-end device after the authentication is passed, and the source-end device judges whether a file is being sent currently; and due to the fact that the source-end device is sending the file to the target-end device A currently, the process of transmission to the target-end device B is ended.

After the file is completely sent to the target-end device A, the source-end device goes into a new transmission process after releasing the connection with the target-end device A, and judges whether a file is being sent currently. Due to the fact that the source-end device does not send files to any devices currently, the source-end device judges whether there is a file, needing to be sent, in the file queue, there is a file, needing to be sent to the target-end device B, in the file queue at the moment, the source-end device judges whether there is a device, needing to send a file, in the device queue, when it is determined that a target-end device B exists, a transmission queue will be established for the target-end device B, and a series of processes including a connection establishment process and a file transmission process are performed on the target-end device B.

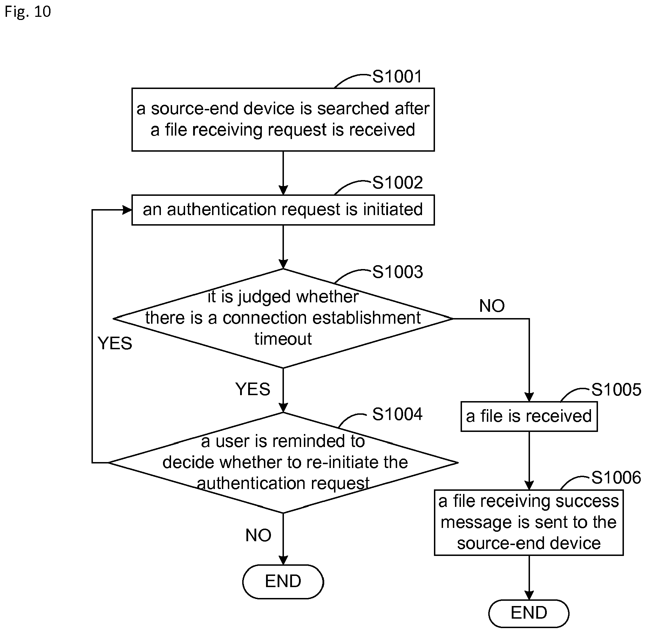

Fig. 10 is an operation flowchart of a target-end device according to embodiment 3 of the disclosure. As shown in Fig. 10, the flow includes the steps as follows.
Step S1001: after a file receiving request is received, a source-end device is searched for. In this step, after confirming that a file is received, a target-end device searches for the source-end device which sends the file.
Step S1002: an authentication request is initiated. In this step, after finding the source-end device, the target-end device initiates the authentication request to the source-end device, such that the source-end device may authenticate the target-end device according to the authentication request, and may establish a connection with the target-end device after the authentication of the target-end device is passed.
Step S1003: it is judged whether there is a connection establishment timeout, if YES, step S1004 is executed, otherwise, step S1005 is executed. In this step, after initiating the authentication request, the target-end device sets a timer to wait for connection establishment, and if there is a waiting timeout, a user is reminded to decide whether to re-initiate the authentication request.
Step S1004: the user is reminded to decide whether to re-initiate the authentication request. If YES, step S1002 is re-executed, otherwise, the transmission process is ended.
Step S1005: a file is received. In this step, after the connection between the target-end device and the source-end device is successfully established, the target-end device receives the file sent by the source-end device.
Step S1006: a file receiving success message is sent to the source-end device. In this step, after the file is successfully received, the target-end device sends a message to the source-end device so as to inform the source-end device of a file sending situation.

In embodiment 4 of the disclosure, two source-end devices send files to a target-end device.

A target-end user approaches two source-end users A and B, both the two source-end users send files to the target-end user, and the target-end user distinguishes and receives the files.

On the target-end device, the target-end device searches for a source-end device A, and sends an authentication request to the source-end device A after the source-end device A is found, so as to establish a connection with the source-end device A and receive a file sent by the source-end device A.

After the file is successfully received from the source-end device A and the connection with the source-end device A has been released, the target-end device searches for the other source-end device B, and sends an authentication request to the source-end device B after the source-end device B is found, so as to establish a connection with the source-end device B and receive a file sent by the source-end device B.

The above is a preferred implementation mode of the disclosure. It should be pointed out that those skilled in the art can also make several improvements and retouches on the premise of not departing from the principle of the disclosure. These improvements and retouches shall fall within the protection scope of the disclosure.

## Claims

1. A data transmission method, comprising:
selecting, by a source-end device, a file to be sent (S101);
authenticating, by the source-end device, devices to be accessed according to authentication requests of the devices to be accessed (S102);
selecting, by the source-end device, a device to be accessed from the authentication-passed devices to be accessed as a target-end device of the file to be sent (5103); and
establishing, by the source-end device, a connection with the target-end device (5104), and sending, by the source-end device, the file to be sent to the target-end device (S105); **characterized in that**: in the step of selecting, by the source-end device, the file to be sent comprises:
adding, by the source-end device, one or more files selected by a user as the file to be sent into a file queue; and the step of sending, by the source-end device, the file to be sent to the target-end device comprises: sending, by the source-end device, the file to be sent in the file queue to the target-end device;
in the step of selecting, by the source-end device, the device to be accessed from the authentication-passed devices to be accessed as the target-end device of the file to be sent comprises: adding, by the source-end device, the authentication-passed devices to be accessed into a device queue; and selecting, by the source-end device, the device to be accessed from the device queue as the target-end device of the file to be sent.

2. The method according to claim 1, further comprising: after the source-end device sends the file to be sent to the target-end device,
receiving and displaying, by the source-end device, file receiving success information sent by the target-end device.

3. The method according to claim 2, further comprising: after the source-end device receives and displays the file receiving success information sent by the target-end device,
deleting, by the source-end device, the target-end device from the device queue, and releasing, by the source-end device, the established connection with the target-end device.

4. A data transmission method, comprising:
initiating, by a target-end device, an authentication request to a found source-end device when confirming that it is necessary to receive a file, such that the source-end device authenticates the target-end device according to the authentication request, and establishes a connection with the target-end device after the authentication of the target-end device is passed (S202); and
receiving, by the target-end device, a file sent by the source-end device (S203); **characterized in that**: in the step of receiving, by the target-end device, the file sent by the source-end device comprises: when adding one or more files selected by a user as a file to be sent into a file queue, receiving, by the target-end device, the file to be sent in the file queue sent by the source-end device;
in the step that the source-end device establishes a connection with the target-end device after the authentication of the target-end device is passed comprises: adding authentication-passed devices to be accessed into a device queue, and selecting the device to be accessed from the device queue as the target-end device to establish the connection with the source-end device.

5. The method according to claim 4, further comprising: after the target-end device receives the file sent by the source-end device,
sending, by the target-end device, file receiving success information to the source-end device.

6. A data transmission device, comprising:
a file selection module, configured to select a file to be sent;
an authentication module, configured to authenticate devices to be accessed according to authentication requests of the devices to be accessed;
a target device confirmation module, configured to select a device to be accessed from the authentication-passed devices to be accessed as a target-end device of the file to be sent;
a connection establishment module, configured to establish a connection with the target-end device; and
a sending module, configured to send the file to be sent to the target-end device after the connection between the connection establishment module and the target-end device is successfully established; **characterized in that** the data transmission device further comprises:
a file storage module, configured to store a file queue; the file selection module, further configured to add one or more files selected by a user as the file to be sent into the file queue; and the sending module, further configured to send the file to be sent in the file queue to the target-end device;
further comprising: a device storage module, configured to store a device queue; the authentication module, further configured to add the authentication-passed devices to be accessed into the device queue; and the target device confirmation module, further configured to select the device to be accessed from the device queue as the target-end device of the file to be sent.

7. The device according to claim 6, further comprising:
an information display module, configured to receive and display file receiving success information sent by the target-end device.

8. The device according to claim 7, further comprising:
a target device deletion module, configured to delete the target-end device from the device queue; and
a connection release module, configured to release the connection established between the connection establishment module and the target-end device.

9. A data transmission device, comprising:
a device searching module, configured to search for a source-end device after confirming that it is necessary to receive a file;
a receiving module, configured to receive a file sent by the source-end device after a connection between the device searching module and the source-end device is successfully established; and
an authentication request module, configured to initiate an authentication request to the source-end device found by the device searching module, such that the source-end device authenticates a target-end device according to the authentication request, and establishes a connection with the device searching module after the authentication of the target-end device is passed;
**characterized in that** the receiving module is further configured, when adding one or more files selected by a user as a file to be sent into a file queue, to receive the file to be sent in the file queue sent by the source-end device;
in the authentication request module is further configured, when adding authentication-passed devices to be accessed into a device queue, to select the device to be accessed from the device queue as the target-end device to establish the connection with the source-end device.

10. The device according to claim 9, further comprising:
an information confirmation module, configured to send file receiving success information to the source-end device after the file is successfully received.

11. A terminal, **characterized in that** the terminal comprises a data transmission device according to any one of claims 6 to 8, or a data transmission device according to any one of claims 9 to 10.

## Patentansprüche

1. Datenübertragungs-Verfahren, umfassend die folgenden Schritte:
Auswählen einer zu sendenden Datei (S101) durch einen Quellen-Endgerät;
Authentifizieren durch das Quellen-Endgerät von Geräten, auf die gemäß den Authentifizierungs-Anforderungen der Geräte zugegriffen werden soll (S102);
Auswählen eines Gerätes, auf das von den authentifizierten Geräten, auf die zugegriffen werden soll, als ein Zielgerät der zu sendenden Datei (S103) zugegriffen wird, und zwar durch das Quellen-Endgerät; und
Herstellen einer Verbindung durch das Quellen-Endgerät mit dem Ziel-Endgerät (S104) und Senden der an das Ziel-Endgerät (S105) zu sendenden Datei durch das Quellen-Endgerät,
**dadurch gekennzeichnet, daß**
der Schritt des Auswählens der zu sendenden Datei durch das Quellen-Endgerät folgendes umfaßt:
Hinzufügen einer oder mehrerer Dateien, die von einem Benutzer als die zu sendende Datei ausgewählt werden, und zwar durch das Quellen-Endgerät, in eine Datei-Warteschlange; und Senden der zu sendenden Datei in der Datei-Warteschlange an das Ziel-Endgerät durch das Quellen-Endgerät, umfassend den Schritt:
Senden der Datei, die in der Dateischlange gesendet werden soll, an das Ziel-Endgerät durch das Quellen-Endgerät; wobei der Schritt des Auswählens durch das Quellen-Endgerät das Gerät, auf das von den durch die Authentifizierung passierten Geräten zugegriffen wird, folgendes aufweist: Hinzufügen der durch Authentifizierung passierten Geräte, auf die zugegriffen werden soll, in eine Geräteschlange, und zwar mit Hilfe des Quellen-Endgerätes, und Auswählen des aus der Geräteschlange herausgegriffenen Gerätes mit Hilfe des Quellen-Endgerätes als Ziel-Endgerät der zu sendenden Datie.

2. Verfahren nach Anspruch 1, ferner umfassend: Nachdem das Quellen-Endgerät die Datei, die an das Ziel-Endgerät gesendet werden soll, sendet, Empfangen und Anzeigen von Dateiempfangs-Erfolgs-Informationen, die durch die Ziel-Endstelle gesendet werden, durch das Ziel-Endgerät.

3. Verfahren nach Anspruch 2, ferner umfassend: Nachdem das Quellen-Endgerät die Dateiempfangs-Erfolgs-Information, die von dem Ziel-Endgerät gesendet wurde, empfängt und anzeigt, Löschen von der Geräteschlange das Ziel-Endgerät durch das Quellen-Endgerät und Freigeben der errichteten Verbindung mit dem Ziel-Endgerät durch das Quellen-Endgerät.

4. Datenübertragungs-Verfahren, umfassend:
Beginnen mit einer Authentifizierungs-Aufforderung durch ein Ziel-Endgerät, um ein Quellen-Endgerät zu finden, sobald bestätigt wird, daß es notwendig ist, eine Datei zu empfangen derart, daß das Quellen-Endgerät das Ziel-Endgerät authentifiziert, und zwar entsprechend der Authentifizierungs-Aufforderung, und eine Verbindung mit dem Ziel-Endgerät herstellt, nachdem die Authentifizierung des Ziel-Endgerätes stattgefunden hat (S202); und
Empfangen einer Datei durch das Ziel-Endgerät, die von dem Quellen-Endgerät (S203) gesendet wird,
**dadurch gekennzeichnet, daß**
der Schritt des Empfangens der durch das Quellen-Endgerät gesendeten Datei mit Hilfe des Ziel-Endgerätes folgendes umfaßt: Wenn eine oder mehrere Dateien durch einen Benutzer als eine in eine Dateischlange zu sendende Datei ausgewählt sind, Empfangen der in die Dateischlange, die von dem Quellen-Endgerät gesendet wird, gesendeten Datei durch das Ziel-Endgerät; wobei zu dem Schritt, der darin besteht, daß das Quellen-Endgerät eine Verbindung mit dem Ziel-Endgerät herstellt, nachdem die Authentifizierung des Ziel-Endgerätes vorüber ist, folgendes umfaßt: Hinzufügen von Authentifizierungs-Geräten, bei denen die Identifizierung erfolgt ist, in eine Geräteschlange und Auswählen des anzuzeigenden Gerätes aus der Geräteschlange als Ziel-Endgerät, um die Verbindung mit dem Quellen-Endgerät herzustellen.

5. Verfahren nach Anspruch 4, ferner **dadurch gekennzeichnet, daß** nachdem das Ziel-Endgerät die von dem Quellen-Endgerät gesendete Datei empfängt, Senden der Datei-Empfangs-Erfolgs-Information an das Quellen-Endgerät durch das Ziel-Endgerät.

6. Datenübertragungs-Vorrichtung, umfassend einen Dateiauswahl-Modul, der so gestaltet ist, daß er eine zu sendende Datei auswählt;
ferner einen Authentifizierungs-Modul, der so gestaltet ist, daß er anzuzeigende gemäß den Authentifizierungs-Aufforderungen der anzuzeigenden Geräte anzeigt;
ferner umfassend einen Zielgeräte-Bestätigungs-Modul, der so gestaltet ist, daß er ein Gerät, das anzuzeigen ist, aus den Geräten, bei denen die Authentifizierung erfolgt ist, auswählt, um es als ein Ziel-Endgerät der zu sendenden Datei anzuzeigen;
des weiteren umfassend einen Verbindungs-Herstellungs-Modul, der so gestaltet ist, daß eine Verbindung mit dem Ziel-Endgerät hergestellt wird; und schließlich umfassend einen Sende-Modul, der so gestaltet ist, daß die an das Ziel-Endgerät zu sendende Datei, nachdem die Verbindung zwischen dem Verbindungs-Herstellungs-Modul und dem Ziel-Endgerät erfolgreich hergestellt ist, gesendet wird,
**dadurch gekennzeichnet, daß** die Datenübertragungs-Vorrichtung des weiteren folgendes aufweist:
einen Dateispeicher-Modul, der so gestaltet ist, daß eine Dateischlange gespeichert wird, wobei der Dateiauswahl-Modul des weiteren so gestaltet ist, daß eine oder mehrere Dateien hinzugefügt werden, die durch den Benutzer ausgewählt werden als die in die Dateischlange zu sendende Datei ausgewählt werden, und daß der Sendemodul des weiteren so gestaltet ist, daß die der Schlange zu sendende Datei zu dem Ziel-Endgerät gesendet wird;
des weiteren umfassend einen Gerätespeicher-Modul, der so gestaltet ist, daß eine Geräteschlange gespeichert wird, wobei der Authentifizierungsmodul des weiteren so gestaltet ist, daß die Geräte, bei denen die Authentifizierung schon erfolgt ist, Zugang zu der Geräteschlange erhalten und der Zielgeräte-Bestätigungs-Modul des weiteren so gestaltet ist, daß aus der Geräteschlange das Zugang erhaltene Gerät als Ziel-Endgerät der zu sendenden Datei ausgewählt wird.

7. Vorrichtung nach Anspruch 6, **gekennzeichnet durch** einen Informations-Displaymodul, der so gebaut ist, daß er Datenempfangs-Erfolgs-Informationen, die durch das Ziel-Endgerät gesendet werden, empfangen und darstellen kann.

8. Vorrichtung nach Anspruch 7, ferner **gekennzeichnet durch** einen Zielgeräte-Löschmodul, der so gebaut ist, daß das Ziel-Endgerät von der Geräteschlange gelöscht werden kann; und
einen Verbindungs-Freigabemodul, der so gebaut ist, daß die zwischen dem Verbindungs-Herstellungsmodul und dem Ziel-Endgerät bestehende Verbindung freigegeben werden kann.

9. Datenübertragungs-Vorrichtung, umfassend einen Geräte-Suchmodul, der so gebaut ist, daß nach einem Quellen-Endgerät nach der Bestätigung, daß die Notwendigkeit besteht, eine Datei zu empfangen, gesucht wird;
ferner umfassend einen Empfangs-Modul, der so gebaut ist, daß durch das Quellen-Endgerät eine Datei empfangen wird, nachdem zwischen dem Gerätesuch-Modul und dem Quellen-Endgerät erfolgreich eine Verbindung errichtet worden ist; sowie umfassend
einen Authentifizierungs-Anfragemodul, der so gebaut ist, daß eine Authentifizierungs-Anfrage an das Quellen-Endgerät gerichtet wird, das durch den Gerätesuch-Modul gefunden wurde, und zwar derart, daß das Quellen-Endgerät ein Ziel-Endgerät gemäß der Authentifizierungsanfrage authentifiziert und mit dem Gerätesuch-Modul, nachdem die Authentifizierung des Ziel-Endgerätes stattgefunden hat, eine Verbindung herstellt;
**dadurch gekennzeichnet, daß** der Empfangsmodul des weiteren so gebaut ist, daß dann, wenn eine oder mehrere Dateien, die durch einen Benutzer als eine Datei ausgewählt wird, die in eine Dateischlange zu senden ist, hinzugefügt werden, um die Datei zu erhalten, die in der Dateischlange durch das Quellen-Endgerät empfangen werden soll;
wobei des weiteren der Authentifizierungs-Aufforderungsmodul so gebaut ist, daß dann, wenn die Authentifizierungs-Geräte, bei denen die Authentifizierung vorbei ist, in einer Geräteschlange Zugriff erhalten, das Gerät ausgewählt wird, das als das Ziel-Endgerät aus der Geräteschlange ergriffen wird, um dadurch die Verbindung mit dem Quellen-Endgerät herzustellen.

10. Gerät nach Anspruch 9, ferner **gekennzeichnet durch** einen Informations-Betätigungsmodul, der so gebaut ist, daß die Dateiempfangs-Erfolgs-Information an das Quellen-Endgerät gesendet wird, nachdem die Datei erfolgreich empfangen worden ist.

11. Terminal, **dadurch gekennzeichnet, daß** er ein Datenübertragungs-Gerät gemäß einem der Ansprüche 6 bis 8 oder ein Datenübertragungs-Gerät gemäß einem der Ansprüche 9 bis 10 aufweist.

## Revendications

1. Procédé de transmission de données, comprenant :
la sélection, par un dispositif final source, d'un fichier à envoyer (S101) ;
l'authentification, par le dispositif final source, de dispositifs dont l'accès est demandé selon des demandes d'authentification des dispositifs dont l'accès est demandé (S102) ;
la sélection, par le dispositif final source, d'un dispositif dont l'accès est demandé parmi les dispositifs dont l'accès est demandé ayant réussi l'authentification en tant que dispositif final cible du fichier à envoyer (S103) ; et
l'établissement, par le dispositif final source, d'une connexion avec le dispositif final cible (S104), et l'envoi, par le dispositif final source, du fichier à envoyer au dispositif final cible (S105) ;
**caractérisé en ce que** :
l'étape de sélection, par le dispositif final source, du fichier à envoyer comprend :
l'ajout, par le dispositif final source, d'un ou de plusieurs fichiers sélectionnés par un utilisateur en tant que fichier à envoyer dans une file d'attente de fichiers ; et l'étape d'envoi, par le dispositif final source, du fichier à envoyer au dispositif final cible comprend : l'envoi, par le dispositif final source, du fichier à envoyer dans la file d'attente de fichiers au dispositif final cible ;
l'étape de sélection, par le dispositif final source, du dispositif dont l'accès est demandé parmi les dispositifs dont l'accès est demandé ayant réussi l'authentification en tant que dispositif final cible du fichier à envoyer comprend : l'ajout, par le dispositif final source, des dispositifs dont l'accès est demandé ayant réussi l'authentification dans une file d'attente de dispositifs ; et la sélection, par le dispositif final source, du dispositif dont l'accès est demandé depuis la file d'attente de dispositifs en tant que dispositif final cible du fichier à envoyer.

2. Procédé selon la revendication 1, comprenant en outre : après que le dispositif final source envoie le fichier à envoyer au dispositif final cible,
la réception et l'affichage, dans le dispositif final source, d'informations de succès de réception de fichier envoyées par le dispositif final cible.

3. Procédé selon la revendication 2, comprenant en outre : après que le dispositif final source reçoit et affiche les informations de succès de réception de fichier envoyées par le dispositif final cible,
la suppression, par le dispositif final source, du dispositif final cible de la file d'attente de dispositifs, et la libération, par le dispositif final source, de la connexion établie avec le dispositif final cible.

4. Procédé de transmission de données, comprenant :
le lancement, par un dispositif final cible, d'une demande d'authentification à un dispositif final source trouvé lors de la confirmation qu'il est nécessaire de recevoir un fichier, si bien que le dispositif final source authentifie le dispositif final cible selon la demande d'authentification, et établit une connexion avec le dispositif final cible après que l'authentification du dispositif final cible est réussie (S202) ; et
la réception, par le dispositif final cible, d'un fichier envoyé par le dispositif final source (S203) ;
**caractérisé en ce que** :
l'étape de réception, par le dispositif final cible, du fichier envoyé par le dispositif final source comprend : lors de l'ajout d'un ou de plusieurs fichiers sélectionnés par un utilisateur en tant que fichier à envoyer dans une file d'attente de fichiers, la réception, par le dispositif final cible, du fichier à envoyer dans la file d'attente de fichiers envoyé par le dispositif final source ;
l'étape où le dispositif final source établit une connexion avec le dispositif final cible après que l'authentification du dispositif final cible est réussie comprend :
l'ajout de dispositifs dont l'accès est demandé ayant réussi l'authentification dans une file d'attente de dispositifs, et la sélection du dispositif dont l'accès est demandé depuis la file d'attente de dispositifs en tant que dispositif final cible pour établir la connexion avec le dispositif final source.

5. Procédé selon la revendication 4, comprenant en outre : après que le dispositif final cible reçoit le fichier envoyé par le dispositif final source,
l'envoi, par le dispositif final cible, d'informations de succès de réception de fichier au dispositif final source.

6. Dispositif de transmission de données, comprenant :
un module de sélection de fichiers, configuré pour sélectionner un fichier à envoyer ;
un module d'authentification, configuré pour authentifier des dispositifs dont l'accès est demandé selon des demandes d'authentification des dispositifs dont l'accès est demandé ;
un module de confirmation de dispositif cible, configuré pour sélectionner un dispositif dont l'accès est demandé parmi les dispositifs dont l'accès est demandé ayant réussi l'authentification en tant que dispositif final cible du fichier à envoyer ;
un module d'établissement de connexion, configuré pour établir une connexion avec le dispositif final cible ; et
un module d'envoi, configuré pour envoyer le fichier à envoyer au dispositif final cible après que la connexion entre le module d'établissement de connexion et le dispositif final cible est établie avec succès ;
**caractérisé en ce que** le dispositif de transmission de données comprend en outre :
un module de stockage de fichiers, configuré pour stocker une file d'attente de fichiers ; le module de sélection de fichiers, configuré en outre pour ajouter un ou plusieurs fichiers sélectionnés par un utilisateur en tant que fichier à envoyer dans la file d'attente de fichiers ; et le module d'envoi, configuré en outre pour envoyer le fichier à envoyer dans la file d'attente de fichiers au dispositif final cible ;
comprenant en outre : un module de stockage de dispositifs, configuré pour stocker une file d'attente de dispositifs ; le module d'authentification, configuré en outre pour ajouter les dispositifs dont l'accès est demandé ayant réussi l'authentification dans la file d'attente de dispositifs ; et le module de confirmation de dispositif cible, configuré en outre pour sélectionner le dispositif dont l'accès est demandé depuis la file d'attente de dispositifs en tant que dispositif final cible du fichier à envoyer.

7. Dispositif selon la revendication 6, comprenant en outre :
un module d'affichage d'informations, configuré pour recevoir et afficher les informations de succès de réception de fichier envoyées par le dispositif final cible.

8. Dispositif selon la revendication 7, comprenant en outre :
un module de suppression de dispositif cible, configuré pour supprimer le dispositif final cible de la file d'attente de dispositifs ; et
un module de libération de connexion, configuré pour libérer la connexion établie entre le module d'établissement de connexion et le dispositif final cible.

9. Dispositif de transmission de données, comprenant :
un module de recherche de dispositif, configuré pour rechercher un dispositif final source après confirmation qu'il est nécessaire de recevoir un fichier ;
un module de réception, configuré pour recevoir un fichier envoyé par le dispositif final source après qu'une connexion entre le module de recherche de dispositif et le dispositif final source est établie avec succès ; et
un module de demande d'authentification, configuré pour lancer une demande d'authentification au dispositif final source trouvé par le module de recherche de dispositif, si bien que le dispositif final source authentifie un dispositif final cible selon la demande d'authentification, et établit une connexion avec le module de recherche de dispositif après que l'authentification du dispositif final cible est réussie ;
**caractérisé en ce que** le module de réception est en outre configuré, lors de l'ajout d'un ou de plusieurs de fichiers sélectionnés par un utilisateur en tant que fichier à envoyer, dans une file d'attente de fichiers, pour recevoir le fichier à envoyer dans la file d'attente de fichiers envoyé par le dispositif final source ;
le module de demande d'authentification est en outre configuré, lors de l'ajout de dispositifs dont l'accès est demandé ayant réussi l'authentification dans une file d'attente de dispositifs, pour sélectionner le dispositif dont l'accès est demandé depuis la file d'attente de dispositifs en tant que dispositif final cible pour établir la connexion avec le dispositif final source.

10. Dispositif selon la revendication 9, comprenant en outre :
un module de confirmation d'informations, configuré pour envoyer des informations de succès de réception de fichier au dispositif final source après que le fichier est reçu avec succès.

11. Terminal, **caractérisé en ce que** le terminal comprend un dispositif de transmission de données selon l'une quelconque des revendications 6 à 8, ou un dispositif de transmission de données selon l'une quelconque des revendications 9 et 10.
